# EUROPEAN PATENT APPLICATION

(11) **EP 3 828 702 A1**
(43) Date of publication of application: **02.06.2021**
(21) Application number: 19839958.6
(22) Date of filing: 17.07.2019
(51) Int. Cl.: G06F 9/455

(54) **SCALING-OUT AND SCALING-IN METHOD FOR NFV SYSTEM, AND RELEVANT APPARATUS AND STORAGE MEDIUM**

(30) Priority: 25.07.2018 CN 201810824994
(71) Applicant: ZTE Corporation, Shenzhen, Guangdong 518057 (CN)
(72) Inventor: ZHAO, Jing, Shenzhen, Guangdong 518057 (CN)
(74) Representative: Pennacchio, Salvatore Giovanni
(86) International application number: PCT/CN2019/096410
(87) International publication number: WO 2020/020036

(57) **Abstract**

Provided is a scaling-out and scaling-in method in a Network Function Virtualization (NFV) system, a relevant apparatus and a storage medium. The present disclosure can realize Virtual Machine (VM) scaling-out and scaling-in according to a service.

## Description

### Cross-Reference to Related Applications

The present disclosure claims priority to China Patent Application No. 201810824994.7 filed to the China National Intellectual Property Administration (CNIPA) on July 25, 2018 and entitled "Scaling-out and Scaling-in Method in NFV System, Relevant Apparatus and Storage Medium", the present disclosure of which is hereby incorporated by reference in its entirety.

### Technical Field

The present disclosure relates to the technical field of communications, in particular to a scaling-out and scaling-in method in a Network Function Virtualization (NFV) system, a relevant apparatus and a storage medium.

### Background

It has become the development trend of the industry to use a common hardware platform to realize the unified management and scheduling of resources based on a Virtual Machine (VM) technology. As virtualization technology matures in recent years, the TESI established a NFV standard research organization to study virtualization standards of telecom network functions. Telecom operators are gradually switching from the traditional service architecture to the NFV architecture. The essence of NFV is the virtualization and clouding of network devices. How to make reasonable use of resources, maximize the use of resources and ensure the normal use of service is more concerned.

In the existing NFV system, the scaling-out of the NFV system can scale out only one type of device, including Service Control Point (SCP), Service Data Point (SDP) and Interface Message Processor (IMP), and so on. In some cases, the VMs scaled out are independent of each other. For example, during scaling of a SCP, the SCP can only be scaled out, and the scaling-out and scaling-in cannot be realized based on a service type, thus limiting the development of the NFV system.

### Summary

Embodiments of the present disclosure provide a scaling-out and scaling-in method in a NFV system, a relevant apparatus and a storage medium to solve the problem in the related art that the NFV system can only support scaling-out based on the device type, which limits the development of the NFV system.

A first embodiment of the present disclosure provides a scaling-out method in a NFV system, which includes the following operations.

It is determined whether a set scaling-out trigger condition is met according to current usage of a service.

When the scaling-out trigger condition is met, a preset scaling-out strategy matching the scaling-out trigger condition is obtained, wherein the scaling-out strategy includes information about one or more interrelated VMs that need to be scaled out.

The one or more VMs are scaled out according to the matching scaling-out strategy.

In an exemplary embodiment, when the scaling-out strategy includes information about multiple interrelated VMs, device types of the multiple interrelated VMs are the same or different.

In an exemplary embodiment, the scaling-out trigger condition includes that: one or more Key Performance Indicators (KPIs) of the service are greater than one or more preset first thresholds respectively corresponding to the one or more KPIs.

In an exemplary embodiment, after the one or more VMs are scaled out, the method further includes that: a VM property of each of the one or more VMs scaled out is set. The VM property includes one or more of the following: a local number, a module number, a process number, and a device type.

In an exemplary embodiment, after the one or more VMs are scaled out, the method further includes that: according to the service, resources are created, versions are installed and service parameters are configured on the one or more VMs scaled out, and modules, links and services between VMs are configured through an injection file, wherein the injection file includes VM properties of the VMs.

In an exemplary embodiment, when the one or more VMs are scaled out, the method further includes that: a unique identity is set for the scaling-out, and the unique identity is assigned to each of the one or more VMs scaled out.

In an exemplary embodiment, the method further includes that: the one or more VMs scaled out are monitored; and when it is detected that a VM is abnormal, the abnormal VM is deleted and a VM is scaled out to replace the abnormal VM.

In an exemplary embodiment, a device type of the VM that is scaled out to replace the abnormal VM is the same as a device type of the abnormal VM;
or,
a VM property of the VM that is scaled out to replace the abnormal VM is the same as a VM property of the abnormal VM.

A second embodiment of the present disclosure provides a scaling-in method in a NFV system, which includes the following operations. It is determined whether a set scaling-in trigger condition is met according to current usage of a service.

When the scaling-in trigger condition is met, a preset scaling-in strategy matching the scaling-in trigger condition is obtained, wherein the scaling-in strategy includes information about one or more interrelated VMs that need to be scaled in.

The one or more VMs are scaled in according to the matching scaling-in strategy.

In an exemplary embodiment, when the scaling-in strategy includes information about multiple interrelated VMs, device types of the multiple interrelated VMs are the same or different.

In an exemplary embodiment, the scaling-in strategy includes that: one or more KPIs of the service are less than one or more preset second thresholds respectively corresponding to the one or more KPIs.

In an exemplary embodiment, the operation that the one or more VMs are scaled in according to the matching scaling-in strategy includes that: a unique identity on the VM is queried according to a service type of the service, all VMs in the same group of VMs scaled out for the service are looked up according to the unique identity, and the one or more VMs are scaled in according to the matching scaling-in strategy.

A third embodiment of the present disclosure provides a scaling-out apparatus in a NFV system, which includes a first determining module, a first obtaining module and a scaling-out module.

The first determining module is configured to determine whether a set scaling-out trigger condition is met according to current usage of a service, and when the scaling-out trigger condition is met, trigger the first obtaining module.

The first obtaining module is configured to obtain a preset scaling-out strategy matching the scaling-out trigger condition, wherein the scaling-out strategy includes information about one or more interrelated VMs that need to be scaled out.

The scaling-out module is configured to scale out the one or more VMs according to the matching scaling-out strategy.

In an exemplary embodiment, when the scaling-out strategy includes information about multiple interrelated VMs, device types of the multiple interrelated VMs are the same or different.

In an exemplary embodiment, the scaling-out trigger condition includes that: one or more KPIs of the service are greater than one or more preset first thresholds respectively corresponding to the one or more KPIs.

In an exemplary embodiment, the apparatus further includes: a first setting module, which is configured to set a VM property of each of the one or more VMs scaled out. The VM property includes one or more of the following: a local number, a module number, a process number, and a device type.

In an exemplary embodiment, the apparatus further includes: a configuring module, configured to, according to the service, create resources, install versions and configure service parameters on the one or more VMs scaled out, and configure modules, links and services between VMs through the injection file, wherein the injection file includes VM properties of the VMs.

In an exemplary embodiment, the apparatus further includes: a second setting module, configured to set a unique identity for the scaling-out, and assign the unique identity to each of the one or more VMs scaled out.

In an exemplary embodiment, the apparatus further includes: a detecting module and a processing module.

The detecting module is configured to monitor the one or more VMs scaled out.

The processing module is configured to, when it is detected that a VM is abnormal, delete the abnormal VM and scale out a VM to replace the abnormal VM.

A fourth embodiment of the present disclosure provides a scaling-in apparatus in a first NFV system, which includes a second determining module, a second obtaining module and a scaling-in module.

The second determining module is configured to determine whether a set scaling-in trigger condition is met according to current usage of a service, and when the scaling-in trigger condition is met, trigger the second obtaining module.

The second obtaining module is configured to obtain a preset scaling-in strategy matching the scaling-in trigger condition, wherein the scaling-in strategy includes information about one or more interrelated VMs that need to be scaled in.

The scaling-in module is configured to scale in the one or more VMs according to the matching scaling-in strategy.

In an exemplary embodiment, when the scaling-in strategy includes information about multiple interrelated VMs, device types of the multiple interrelated VMs are the same or different.

In an exemplary embodiment, the scaling-in strategy includes that: one or more KPIs of the service are less than one or more preset second thresholds respectively corresponding to the one or more KPIs.

In an exemplary embodiment, the scaling-in module is further configured to query a unique identity on the VM according to a service type of the service, look up, according to the unique identity, all VMs in the same group of VMs scaled out for the service, and scale in the one or more VMs according to the matching scaling-in strategy.

A fifth embodiment of the present disclosure provides a Virtual Network Function Manager (VNFM), which includes: the scaling-out apparatus in a NFV system in the third embodiment of the present disclosure and the scaling-in apparatus in a NFV system in the fourth embodiment.

A sixth embodiment of the present disclosure provides a computer readable storage medium, which stores a computer program of signal mapping. The computer program is executed by at least one processor to implement the scaling-out method in a NFV system in the first embodiment of the present disclosure.

A seventh embodiment of the present disclosure provides a computer readable storage medium, which stores a computer program of signal mapping. The computer program is executed by at least one processor to implement the scaling-in method in a NFV system in the second embodiment of the present disclosure.

### Brief Description of the Drawings

Fig. 1 is a flowchart of a scaling-out method in a NFV system provided in the first embodiment of the present disclosure.
Fig. 2 is a flowchart of a scaling-in method in a NFV system provided in the second embodiment of the present disclosure.
Fig. 3 is a structure diagram of a scaling-out and scaling-in system in a NFV system provided in the third embodiment of the present disclosure.
Fig. 4 is a schematic diagram showing an interactive flow of scaling-out in a NFV system provided in the third embodiment of the present disclosure.
Fig. 5 is a schematic diagram showing an interactive flow of scaling-in a NFV system provided in the third embodiment of the present disclosure.
Fig. 6 is a schematic diagram showing a processing flow for a fault of a VM scaled out provided in the third embodiment of the present disclosure.
Fig. 7 is a schematic diagram showing another processing flow for a fault of a VM scaled out provided in the third embodiment of the present disclosure.
Fig. 8 is a schematic diagram of a scaling-out and scaling-in scenario provided in the third embodiment of the present disclosure.
Fig. 9 is a structure diagram of a scaling-out and scaling-in apparatus in a NFV system provided in the fourth embodiment of the present disclosure.
Fig. 10 is a structure diagram of another scaling-out and scaling-in apparatus in a NFV system provided in the fifth embodiment of the present disclosure.

### Detailed Description of the Embodiments

Exemplary embodiments of the present disclosure will be described in more detail with reference to the drawings. Although the exemplary embodiments of the present disclosure are shown in the drawings, it should be understood that the present disclosure may be implemented in various forms and shall not be limited by the embodiments described here. These embodiments are provided in order to facilitate a more thorough understanding of the present disclosure and to be able to fully convey the scope of the present disclosure to those having ordinary skill in the art.

In the embodiments of the present disclosure, a VNFM scales out one or more VMs according to a service, which reduces the complexity of service configuration. The technical solution in the embodiments of the present disclosure can solve the problem in the related art that a NFV system can only support scaling-out based on the device type, which limits the development of the NFV system. The methods of the embodiments of the present disclosure will be explained and described in detail below based on several specific examples.

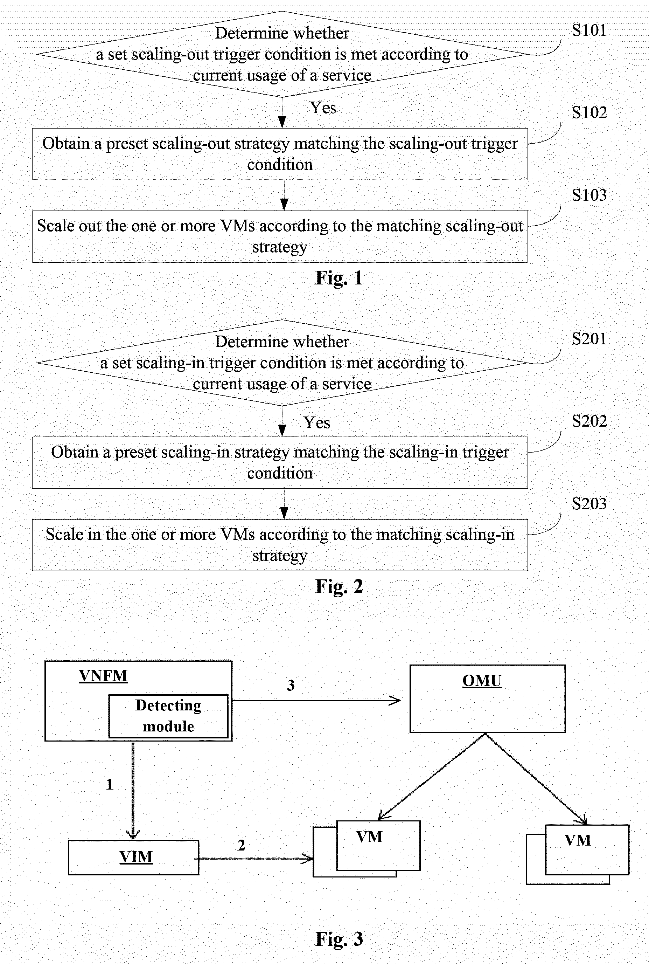

A first embodiment of the present disclosure provides a scaling-out method in a NFV system. With reference to Fig. 1, the method includes the following operations.

At S101, it is determined whether a set scaling-out trigger condition is met according to current usage of a service.

At S102, when the scaling-out trigger condition is met, a preset scaling-out strategy matching the scaling-out trigger condition is obtained, wherein the scaling-out strategy includes information about one or more interrelated VMs that need to be scaled out.

At S103, the one or more VMs are scaled out according to the matching scaling-out strategy.

It can be concluded based on the above operations that the method in the embodiments of the present disclosure can scale out one or more VMs based on the service. In the embodiments of the present disclosure, when the scaling-out trigger condition is met, the scaling-out strategy matching the scaling-out trigger condition is obtained, and then one or more VMs are scaled out according to the matching scaling-out strategy. This technical solution effectively solves the problem in the related art that the NFV system can only support scaling-out based on the device type, which limits the development of the NFV system.

It is to be noted that in the embodiments of the present disclosure, after the one or more VMs are scaled out, links between the VMs scaled out need to be notified to an Operation and Maintenance unit (OMU), so that the OMU can bring the service online.

In exemplary implementations, the services involved in the embodiments of the present disclosure include a call service, a drift service, a switching service, a billing service, etc. of an intelligent network. Of course, those having ordinary skill in the art may also apply the method in the embodiments of the present disclosure to other schemes requiring scaling-out and scaling-in, and the application scenario of the method in the embodiments of the present disclosure is not limited.

The service type of the service involved in the embodiments of the present disclosure may be obtained according to a service function or a module function registered by the service. That is, the service type involved in the embodiments of the present disclosure may be the service function or the module function registered by the service, or of course may be a configured service type.

In exemplary implementations, the scaling-out trigger condition in the embodiments of the present disclosure includes that: one or more KPIs of the service are greater than one or more preset first thresholds respectively corresponding to the one or more KPIs.

In practical implementation, the scaling-out trigger condition in the embodiments of the present disclosure may be set according to actual situations. For example, the scaling-out trigger condition in the embodiments of the present disclosure may be set as follows: a certain KPI of the service is greater than a preset first threshold of the KPI; or each KPI in a certain group of KPIs is greater than a preset first threshold respectively corresponding to each KPI.

For example, the scaling-out trigger condition may be set as follows: the telephone traffic reaches 12000caps/s; or the telephone traffic reaches 15000caps/s, the CPU reaches 60 %, and the memory reaches 60%, etc.

It is to be noted that the scaling-out trigger condition in the embodiments of the present disclosure may be set or adjusted according to actual situations. The scaling-out trigger condition in the embodiments of the present disclosure may be set to be based on only one KPI, or based on a group of KPIs. When the scaling-out trigger condition is set to be based on a group of KPIs, scaling-out is performed when all KPI thresholds in the group are reached at the same time. Of course, in exemplary implementations, multiple scaling-out trigger conditions may also be set, and the corresponding scaling-out schemes may be performed when different scaling-out trigger conditions are met.

The scaling-out strategy in the embodiments of the present disclosure is set based on the service type and the current situation of the service. Specifically, the scaling-out strategy in the embodiments of the present disclosure is set based on the service type of the service and a certain KPI of the service (or each KPI in a certain group of KPIs).

A matching relationship between the scaling-out trigger condition and the scaling-out strategy in the embodiments of the present disclosure is illustrated below by taking a call service as an example.
1) When the designated telephone traffic reaches 12000caps/s, scaling-out one SCP will be triggered automatically.
2) When the designated telephone traffic reaches 15000caps/s, the CPU reaches 60%, and the memory reaches 60%, scaling-out two SCPs will be triggered automatically.
3) When the designated telephone traffic reaches 12000caps/s, and the number of database threads reaches 15, scaling-out one SCP and one Service Data Point (SDP) will be triggered automatically.

In general, in the embodiments of the present disclosure, by setting multiple scaling-out trigger conditions and setting a matching scaling-out strategy for each scaling-out trigger condition, the VNFM can match the scaling-out trigger condition with the preset scaling-out strategy, and automatically scale out one or more VMs by group according to the matching scaling-out strategy. In this way, the method in the embodiments of the present disclosure effectively avoids the operation of manually configuring the VM at a service side in the related art, shortens the time of scaling-out, and can realize scaling-out without interrupting the service.

In exemplary implementations of the embodiments of the present disclosure, after the preset scaling-out trigger condition is met, the one or more VMs are scaled out according to the service type of the service. Specifically, when a certain KPI of the service is greater than the preset first threshold of the KPI, or each KPI in a certain of KPIs is greater than the preset first threshold corresponding to the KPI, multiple VMs of different device types related to the service are scaled out by group according to the service type of the service and the requirement of the service.

That is, in exemplary implementations, when the scaling-out strategy includes information about multiple interrelated VMs, device types of the multiple interrelated VMs may be the same or different.

That is, in the embodiments of the present disclosure, the VNFM supports scaling-out and scaling-in by group. The concept of scaling-out and scaling-in "by group" refers to arranging multiple VMs of different types associated with each other in the same group according to service requirements. A certain service may correspond to one group, or a certain function may correspond to one group, or a certain kind of configuration may correspond to one group.

In exemplary implementation of the embodiments of the present disclosure, the scaling-out trigger condition and the scaling-out strategy corresponding to the scaling-out trigger condition are set according to the service type and the actual needs of the service.

The scaling-out mode of the embodiments of the present disclosure is relatively flexible, and performs scaling-out according to the actual situation of the service, which can not only ensure the normal operation of the service, but also maximize the utilization of resources. Users do not need to pay attention to the specific devices to be scaled out, so as to obtain a better user experience.

In exemplary implementations of the embodiments of the present disclosure, after the one or more VMs are scaled out, a VM property of each of the one or more VMs scaled out needs to be set, and a unique identity is set for all the VMs scaled out. The unique identity is used to identify the same group of VMs scaled out for the service.

That is, in the embodiments of the present disclosure, a unique identity is set for the scaling-out, and the unique identity is assigned to each of the one or more VMs scaled out.

Specifically, in the embodiments of the present disclosure, the VNFM scales out the one or more VMs according to the preset scaling-out strategy, and then sets a VM property of each of the one or more VMs scaled out and the unique identity of all the VMs in the group after scaling-out.

The VM property in the embodiments of the present disclosure includes one or more of the following: a local number, a module number, a process number, and a device type. Of course, in exemplary implementations, those having ordinary skill in the art may also set other VM properties, which is not limited in the embodiments of the present disclosure.

In exemplary implementations, after the one or more VMs are scaled out, the method further includes that: according to the service, resources are created, versions are installed and service parameters are configured on the one or more VMs scaled out, and modules, links and services between VMs are configured through an injection file. The injection file in the embodiments of the present disclosure includes VM properties of the VMs.

Specifically, when the VM properties are arranged, the local number, the module number, the specific process number, the device type (SCP, SDP, IMP, etc.) and other information are configured. The VNFM stores the configured information in the injection file. By adding a unique identity to a group of VMs, for example, if two VMs, namely VM1 (SP) and VM2 (SDP), are scaled out at the same time (there is also a grouping label for scaling-out only one machine), both the two VMs have the unique identity. The unique identity represents that the two VMs are scaled out by group according to the service type. After a service version is installed on the VMs scaled out, the related configuration of modules, links and services between two VMs is performed through the injection file. After configuration, the VNFM notifies the OMU at the service side to bring the service online. As such, the scaling-out is completed.

In exemplary implementations, the method of the embodiments of the present disclosure further includes that: the one or more VMs scaled out are monitored; and when it is detected that a VM is abnormal, the abnormal VM is deleted and a VM is scaled out to replace the abnormal VM.

It is to be noted that, a device type of the VM that is scaled out to replace the abnormal VM is the same as a device type of the abnormal VM; or, a VM property of the VM that is scaled out to replace the abnormal VM is the same as a VM property of the abnormal VM.

Specifically, in the embodiments of the present disclosure, after querying the unique identity of a failed VM and finding, according to the unique identity, the service type of the service corresponding to the VM, the VM may be brought offline, and one or more VMs with the same VM properties as the failed VM may be scaled out according to the service type. Or, after querying the unique identity of the VM and finding, according to the unique identity, the service type of the service corresponding to the VM, one or more VMs with the same device type as the failed VM may be scaled out according to the service type, and the failed VM is brought offline.

That is, the method of the embodiments of the present disclosure further includes a fault auto-test and auto-recovery function. In exemplary implementations, when the VNFM detects that a certain VM fails, or there is a link break alarm report between the two VMs, or a certain service module reports a service exception alarm, the following auto-recovery scheme is adopted.

If the VM needing to be scaled out has the same VM property as the failed VM, for example, the VM needing to be scaled out and the failed VM have the same IP address, local number or module number, then first a unique identity on the VM is queried to find the corresponding service type, the failed VM is brought offline, and the failed VM is deleted; at the same time, scaling-out is initiated, and property information of the VM scaled out is set to be consistent with the VM property of the failed VM.

For example, there are currently two SCPs and one SDP under the call service, if it is detected that one of the two SCPs is abnormal, the OMU is notified to bring the abnormal SCP offline, and at the same time scale out one SCP, so as to keep the VM properties of the two VMs consistent.

The other mechanism is relatively safe. That is, the VM property is not required to be the same as before. When it is detected that a VM is abnormal, the unique identity on the VM is first queried to find the corresponding service type, then one or more VMs with the corresponding device type are scaled out, and then the abnormal VM is deleted.

For example, there are currently two abnormal SCPs and one SDP under the call service, if it is detected that one of the two SCPs is abnormal, first the service type is determined according to the abnormal SCP, scaling-out is initiated, and the service is brought online. After the OMU feeds back that a node goes online normally, the abnormal SCP is brought offline.

A second embodiment of the present disclosure provides a scaling-in method in a NFV system. With reference to Fig. 2, the method includes the following operations.

At S201, it is determined whether a set scaling-in trigger condition is met according to current usage of a service.

At S202, when the scaling-in trigger condition is met, a preset scaling-in strategy matching the scaling-in trigger condition is obtained, wherein the scaling-in strategy includes information about one or more interrelated VMs that need to be scaled in.

At S203, the one or more VMs are scaled in according to the matching scaling-in strategy.

It can be concluded based on the above operations that the method in the embodiments of the present disclosure can scale in one or more VMs based on the service. In the embodiments of the present disclosure, when the scaling-in trigger condition is met, the scaling-in strategy matching the scaling-in trigger condition is obtained, and then one or more VMs are scaled in according to the matching scaling-in strategy. This technical solution effectively solves the problem in the related art that the NFV system can only support scale-in based on the device type, which limits the development of the NFV system.

It is to be noted that in the embodiments of the present disclosure, after the one or more VMs are scaled in, links between the VMs scaled in need to be notified to the OMU, so that the OMU can bring the service offline.

Similar to scaling-out, the multiple interrelated VMs in the scaling-in strategy of the embodiments of the present disclosure have the same or different device types.

In exemplary implementations, the scaling-in strategy of the embodiments of the present disclosure includes that: one or more KPIs of the service are less than one or more preset second thresholds respectively corresponding to the one or more KPIs.

In exemplary implementations, the scaling-in trigger condition of the embodiments of the present disclosure may be set as follows: a certain KPI of the service is less than the preset second threshold of the KPI, or each KPI in a certain group of KPIs is less than the preset second threshold corresponding to the KPI.

For example, the scaling-in trigger condition is set as follows: the telephone traffic is lower than 15000caps/s and higher than 12000caps/s. Or, the scaling-in trigger condition is set as follows: the telephone traffic is lower than 12000caps/s, and the number of database threads is less than 10, etc.

It is to be noted that the scaling-in trigger condition in the embodiments of the present disclosure may be set or adjusted according to actual situations. The scaling-in trigger condition in the embodiments of the present disclosure may be set to be based on only one KPI, or based on a group of KPIs. When the scaling-in trigger condition is set to be based on a group of KPIs, scaling in is performed when all KPI thresholds in the group are reached at the same time. Of course, in exemplary implementations, multiple scaling-in trigger conditions may also be set, and the corresponding scaling-in schemes may be performed when different scaling-in trigger conditions are met.

The scaling-in strategy in the embodiments of the present disclosure is set based on the service type and the current situation of the service. Specifically, the scaling-in strategy in the embodiments of the present disclosure is set based on the service type of the service and a certain KPI of the service (or each KPI in a certain group of KPIs).

A matching relationship between the scaling-in trigger condition and the scaling-in strategy in the embodiments of the present disclosure is illustrated below by taking the call service as an example.

When the designated telephone traffic is lower than 15000caps/s and higher than 12000caps/s, the CPU is lower than 40%, and the memory reaches 40%, scaling-in one SCP will be triggered automatically.

When the designated telephone traffic is lower than 12000caps/s, and the number of database threads is less than 10, scaling-in one SCP and one SDP will be triggered automatically.

It is to be noted that similar to the scaling-in trigger condition, the scaling-in trigger condition in the embodiments of the present disclosure may also be set or adjusted according to actual situation. The scaling-in trigger condition in the embodiments of the present disclosure may be set to be based on only one KPI, or based on a group of KPIs. When the scaling-in trigger condition is set to be based on a group of KPIs, scaling-out is performed when all the set second thresholds in the group are reached at the same time. Of course, in exemplary implementations, multiple scaling-in trigger conditions may also be set, and the corresponding scaling-in schemes may be performed when different scaling-in trigger conditions are met.

In general, in the embodiments of the present disclosure, by setting multiple scaling-in trigger conditions and setting a matching scaling-in strategy for each scaling-in trigger condition, the VNFM can match the scaling-in trigger condition with the preset scaling-in strategy, and automatically scale in one or more VMs by group according to the matching scaling-in strategy. In this way, the method in the embodiments of the present disclosure effectively avoids the operation of manually configuring the VM at a service side in the related art, shortens the time of scaling-in, and can realize scaling-in without interrupting the service.

In exemplary implementations, when a certain KPI of the service is less than the preset second threshold of the KPI, or each KPI in a certain of KPIs is less than the preset second threshold corresponding to the KPI, multiple VMs of different device types related to the service are scaled in by group according to the matching scaling-in strategy.

In exemplary implementations of the embodiments of the present disclosure, the scaling-in trigger condition and the scaling-in scheme corresponding to the scaling-in trigger condition are set according to the service type and the actual needs of the service.

The scaling-out and scaling-in mode of the embodiments of the present disclosure is relatively flexible, and performs scaling-out and scaling-in according to the actual situation of the service, which can not only ensure the normal operation of the service, but also maximize the utilization of resources. Users do not need to pay attention to the specific devices to be scaled out or scaled in.

In exemplary implementations, the operation that the one or more VMs are scaled in according to the matching scaling-in strategy includes that: a unique identity on the VM is queried based on the service type of the service, all VMs in the same group of VMs scaled out for the service are looked up according to the unique identity, and the one or more VMs are scaled in according to the matching scaling-in strategy.

The scaling-in method of the present disclosure is described in detail below through a specific example.

When a preset scaling-in trigger condition is met, the VNFM first queries the unique identity on the VM according to the service type, and finds all the VMs belonging to the group according to the unique identity; at the same time, the VNFM scales in all the VMs of the group and notifies the OMU to perform a scaling-in operation.

That is, in the embodiments of the present disclosure, a unique identity on the VM is queried based on the service type of the service, all VMs in the same group of VMs scaled out for the service are looked up according to the unique identity, and the one or more VMs are scaled in according to the requirement of the service.

In the embodiments of the present disclosure, the scaling-out trigger condition and the scaling-in trigger condition are set, and one or more VMs are automatically scaled out or scaled in after the trigger conditions are met. On the one hand, the problems of unreasonable utilization of resources and impossibility of elastic scaling-out caused by creating the VM in advance are avoided. On the other hand, the manual configuration is avoided, thus shortening the time of scaling-out and scaling-in and realizing scaling-out and scaling-in without interrupting the service.

In addition, the scaling-out and scaling-in according to the scaling-out trigger condition and the scaling-in trigger condition in the embodiments of the present disclosure are set according to the service requirement of the service, and can be adjusted according to the actual service situation.

In general, the core of the embodiments of the present disclosure is VM scaling-out and scaling-in based on the service type. Specifically, the corresponding relationship between the trigger condition and the scaling-out or scaling-in strategy is set, after the scaling-out trigger condition or the scaling-in trigger condition is met, the preset strategy matching the trigger condition is determined, and VM scaling-out or scaling-in is performed according to the matching scaling-out or scaling-in strategy. After the links between VMs scaled out are configured, the OMU is notified to bring the service online or offline. In this way, the automatic scaling-out and scaling-in of the VM is completed automatically. The method in the embodiments of the present disclosure effectively avoids the operation of manually configuring the VM at the service side required in the related art, thereby shortening the time of scaling-out and scaling-in, and realizing scaling-out and scaling-in without interrupting the service.

A third embodiment of the present disclosure provides a scaling-out and scaling-in method in a NFV system. In combination with Fig. 3 to Fig. 8, and taking an intelligent network as an example, the scaling-out and scaling-in method of the embodiments of the present disclosure is explained and illustrated in detail below.

The VNFM in the embodiments of the present disclosure supports scaling-out and scaling-in by group. The concept of scaling-out and scaling-in "by group" refers to arranging multiple VMs of different types associated with each other in the same group according to service requirements. It can be understood that a certain service may correspond to one group, or a certain function may correspond to one group, or a certain kind of configuration may correspond to one group. The method in the embodiments of the present disclosure mainly includes the three processes, which are respectively scaling-out by group, scaling-in by group and fault detection and auto-recovery.

During scaling-out by group, the corresponding device module can be scaled out automatically according to the specific registered service function or module function. The users have no need to consider the number of device types to be scaled out, and the VNFM will automatically determine the number of device types to be scaled out based on the registered service.

Taking the services in the intelligent network as an example, multiple services (such as a call service, a drift service, a switching service, a billing service, etc.) are registered, and a service type serves as a group. Here, the call service is understood as one group, and relates to multiple device types. When a certain KPI (CPU, memory, the number of database threads, disk I/O, telephone traffic) or a KPI combination in the call service reaches the threshold (or respective thresholds), scaling-out by group is triggered automatically, and one or more modules related to the call service are automatically scaled out.
1) When the designated telephone traffic reaches 12000caps/s, scaling-out one SCP will be triggered automatically.
2) When the designated telephone traffic reaches 15000caps/s, the CPU reaches 60%, and the memory reaches 60%, scaling-out two SCPs will be triggered automatically.
3) When the designated telephone traffic reaches 12000caps/s, the number of database threads reaches 15, scaling-out one SCP and one SDP will be triggered automatically.

The scaling-out mode of the embodiments of the present disclosure is relatively flexible, and can perform scaling-out according to the actual situation of the service, which can not only ensure the normal operation of the service, but also maximize the utilization of resources. Users do not need to pay attention to the specific devices to be scaled out or scaled in.

The configuration process of the embodiments of the present disclosure includes that: when the VM properties are arranged, the local number, the module number, the specific process number, the device type (SCP, SDP, IMP, etc.) and other information are configured.

The VNFM stores the configured information in the injection file. By adding a unique identity to a group of VMs, for example, if two VMs, namely VM1 (SP) and VM2 (SDP), are scaled out at the same time (there is also a grouping label for scaling-out only one machine), both the two VMs have the unique identity. The unique identity represents that the two VMs are scaled out by group according to the service type. After a service version is installed on the VMs scaled out, the related configuration of modules, links and services between two VMs is performed through the injection file. After configuration, the VNFM notifies the OMU at the service side to bring the service online. As such, the simultaneous scaling-out of two modules is completed.

During scaling-in by group, when the KPI is lower than a preset scaling-in threshold, scaling-in is triggered, and the VNFM finds the corresponding service type according to the KPI and notifies the OMU to bring the service offline. All the scaling-in modules must meet initial capacity set initially.
1) When the designated telephone traffic is lower than 15000caps/s and higher than 12000caps/s, the CPU is lower than 40%, and the memory reaches 40%, scaling-in one SCP will be triggered automatically.
2) When the designated telephone traffic is lower than 12000caps/s, and the number of database threads is less than 10, scaling-in one SCP and one SDP will be triggered automatically.

The specific scaling-in process may be implemented in the following manner. The unique identity on the VM is first queried according to the service type, all the VMs belonging to the group are found according to the unique identity, all the VMs of this group are scaled in and the OMU is notified to perform a scaling-in operation.

During fault detection and auto-recovery, when it is detected that a certain VM fails, or there is a link break alarm report between two VMs, or a certain service module reports a service exception alarm, the following operation is performed.

If a VM having the same VM property as before needs to be scaled out, for example, a VM with the same IP address, local number or module number needs to be scaled out, then first a unique identity on the VM is queried to find the corresponding service type, the VM is brought offline, and the VM is deleted; at the same time, scaling-out is initiated, and the property information of the VM scaled out is set to be consistent with the property information of the deleted VM.

For example, assuming that there are currently two SCPs and one SDP under the call service, if it is detected that one of the two SCPs is abnormal, the OMU is notified to bring the abnormal SCP offline, and at the same time scale out one SCP and keep the VM properties of the two SCPs consistent.

The other mechanism is relatively safe. That is, the VM property is not required to be the same as before. When it is detected that a VM is abnormal, the unique identity on the VM is first queried to find the corresponding service type, then one or more VMs with the corresponding device type are scaled out, and then the abnormal VM is deleted.

For example, assuming that there are currently two abnormal SCPs and one SDP under the call service, if it is detected that one of the two SCPs is abnormal, first the service type is determined according to the abnormal SCP, scaling-out is initiated, and the service is brought online. After the OMU feeds back that a node goes online normally, the abnormal SCP is brought offline. This mechanism is relatively safe.

The architecture of the technical solution is generally described below with reference to Fig. 3.

The Virtualized Infrastructure Manager (VIM) takes charge of managing and monitoring resources throughout the infrastructure layer.

The VNFM takes charge of life cycle management (instantiation, elastic scaling-out and scaling-in, upgrade, etc.) of Virtualized Network Function (VNF).

The OMU takes charge of maintenance of service operation.

The interface 1 implements deployment of service applications. The detection module takes charge of detecting the specific service type.

The interface 2 is an interface for the VIM to manage a virtualization layer, including: creation, recycling, configuration, monitoring, and so on.

The interface 3 is an interface for the VNFM to realize the life cycle management of the VNF.

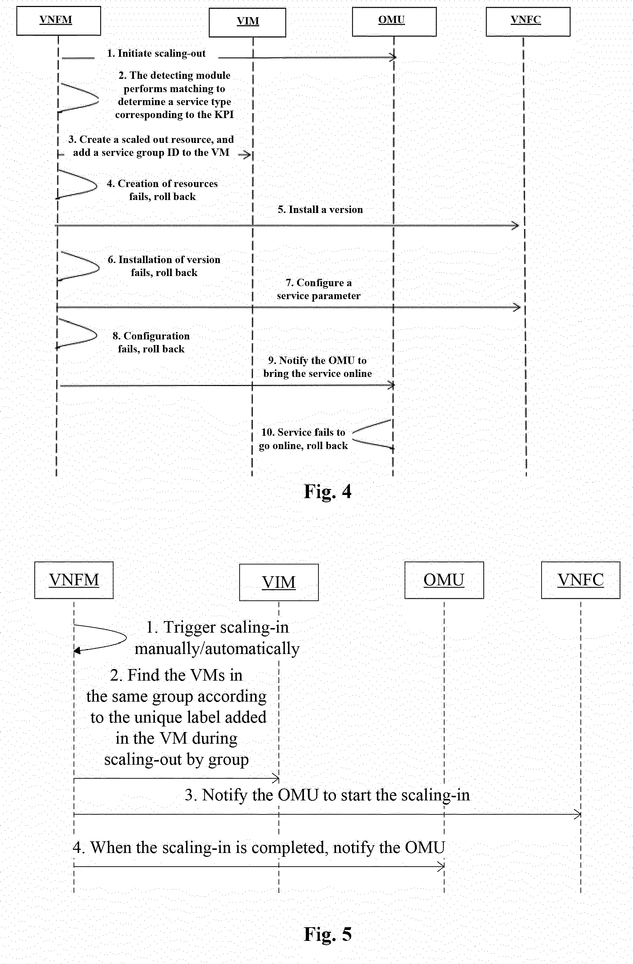

Fig. 4 is a schematic diagram showing an interactive flow of scaling-out in a NFV system provided by an embodiment of the present disclosure. As shown in Fig. 4, after receiving a notification that the KPI of the service reaches the preset scaling-out trigger condition, the VNFM initiates automatic scaling-out.

The detection module of the VNFM detects the service type corresponding to a reported KPI after receiving the reported KPI, and determines, based on the service type, the device type needing to be scaled out for the service type.

According to the service type, a group of VMs are scaled out, and a unique identity is added in the information of each VM to indicate which VMs belong to the same group. The unique identity is also stored in a cloud host resource of openstack as a property in metadata.

If resource creation fails, then scaling-out fails, and the process rolls back.

If the resource creation succeeds, the service version is installed.

If version installation fails, then scaling-out fails, and the process rolls back.

After the version installation is completed, automatic service configuration is performed according to the information in the injection file. After the configuration is completed, the OMU at the service side is notified to bring the service online.

If the configuration fails, then scaling-out fails, and the process rolls back.

After the one or more VMs scaled out goes online successfully, scaling-out is completed, and the service can be used normally.

If the service fails to go online, then scaling-out fails, and the process rolls back.

Fig. 5 is a schematic diagram showing an interactive flow of scaling-in a NFV system provided by an embodiment of the present disclosure. As shown in Fig. 5, the VNFM of the embodiments of the present disclosure initiates manual or automatic scaling-in.

The VNFM finds all the VMS with the same label based on the label information on the VMs.

The VNFM notifies the OMU to initiate scaling-in, and the OMU approves the scaling-in.

After scaling-in is completed, the VNFM notifies the OMU that scaling-in is successful.

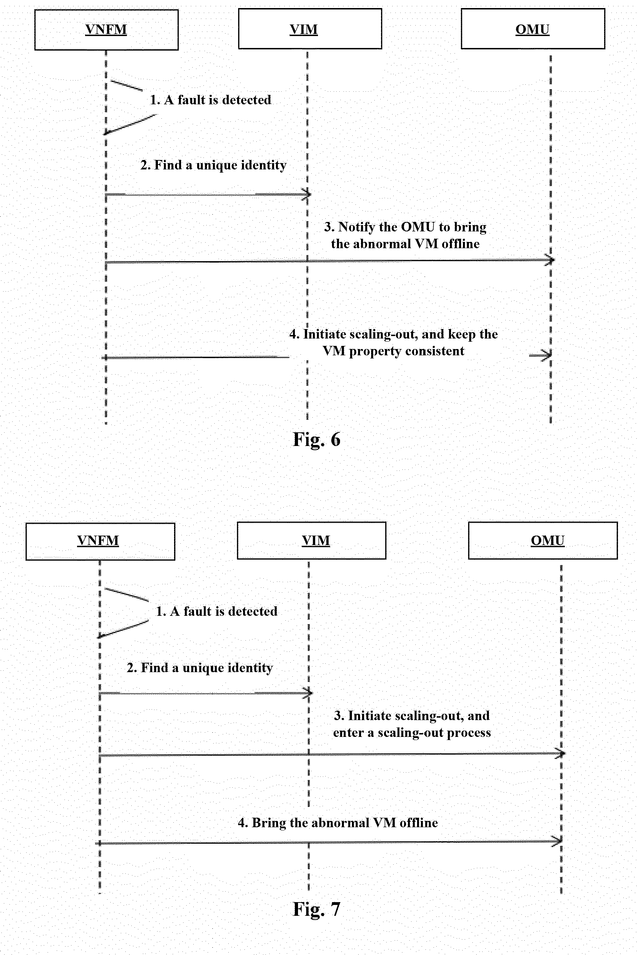

Fig. 6 is a schematic diagram showing a processing flow for a fault of a VM scaled out provided by an embodiment of the present disclosure. As shown in Fig. 6, when the VNFM of the embodiments of the present disclosure detects, during operation, that a certain VM is abnormal or there is related alarm that the service cannot be used, the VNFM looks for all the VMS with the same unique identity based on the label information on the abnormal VM or the VM with abnormal link, notifies the OMU that the VM is abnormal and the service needs to be brought offline, and initiates a scaling-in process, that is, deletes the group of VMs. At the same time, the VNFM initiates a scaling-out process, in which the VM property after scaling-out is kept consistent with the VM property before the scaling-out.

Fig. 7 is a schematic diagram showing another processing flow for a fault of a VM scaled out provided by an embodiment of the present disclosure. As shown in Fig. 7, when the VNFM of the embodiments of the present disclosure detects, during operation, that a certain VM is abnormal or there is related alarm that the service cannot be used, the VNFM looks for all the VMS with the same unique identity based on the unique identity on the abnormal VM or the VM with abnormal link, initiates the scaling-out process, and makes the service go online. Then, the VNFM initiates the scaling-in process, and deletes the abnormal VM.

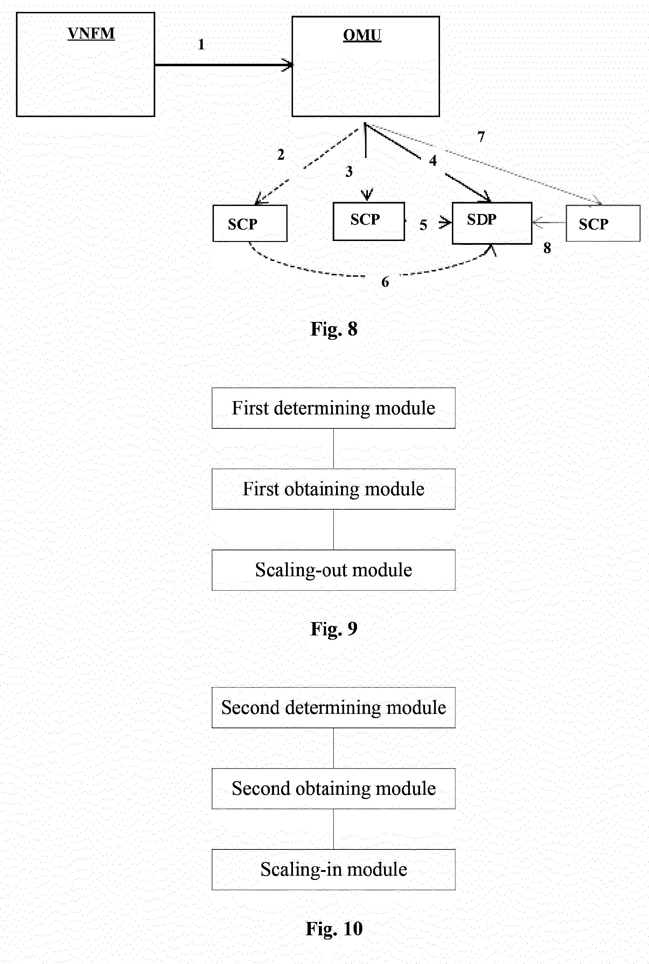

Fig. 8 is a schematic diagram of a scaling-out and scaling-in scenario provided by an embodiment of the present disclosure. As shown in Fig. 8, taking the call service as an example, the VNFM of the embodiments of the present disclosure initiates a scaling-out or scaling-in operation. The solid lines marked by 3, 4 and 5 in the figure represent links between the modules on which the call service operates normally. The dashed lines marked by 2 and 6 in the figure represent the scenario where one SCP is scaled in. After scaling-in, the link 6 will be deleted. The lines marked by 7 and 8 in the figure represent the scenario where one SCP is scaled out, and a link 8 is added.

A fourth embodiment of the present disclosure provides a scaling-out and scaling-in apparatus in a NFV system. With reference to Fig. 9, the apparatus includes a first determining module, a first obtaining module and a scaling-out module.

The first determining module is configured to determine whether a set scaling-out trigger condition is met according to current usage of a service, and when the scaling-out trigger condition is met, trigger the first obtaining module.

The first obtaining module is configured to obtain a preset scaling-out strategy matching the scaling-out trigger condition, wherein the scaling-out strategy includes information about one or more interrelated VMs that need to be scaled out.

The scaling-out module is configured to scale out the one or more VMs according to the matching scaling-out strategy.

That is, when the scaling-out trigger condition is met, the scaling-out strategy matching the scaling-out trigger condition is obtained, and then the one or more VMs are scaled out according to the matching scaling-out strategy. This technical solution effectively solves the problem in the related art that the NFV system can only support scaling-out based on the device type, which limits the development of the NFV system.

It is to be noted that in the embodiments of the present disclosure, after the one or more VMs are scaled out, links between the VMs scaled out need to be notified to the OMU, so that the OMU can bring the service online.

It is to be noted that the services involved in the embodiments of the present disclosure include a call service, a drift service, a switching service, a billing service, etc. of an intelligent network. Of course, those having ordinary skill in the art may also apply the method in the embodiments of the present disclosure to other schemes requiring scaling-out and scaling-in, and the application scenario of the apparatus in the embodiments of the present disclosure is not limited.

In exemplary implementations, the scaling-out trigger condition in the embodiments of the present disclosure includes that: one or more KPIs of the service are greater than one or more preset first thresholds respectively corresponding to the one or more KPIs.

Specifically, the scaling-out trigger condition in the embodiments of the present disclosure may be set according to the actual situations. For example, the scaling-out trigger condition in the embodiments of the present disclosure may be set as follows: a certain KPI of the service is greater than the preset first threshold of the KPI; or each KPI in a certain group of KPIs is greater than the preset first threshold corresponding to the KPI.

For example, the scaling-out trigger condition is set as follows: the telephone traffic reaches 12000caps/s; or the telephone traffic reaches 15000caps/s, the CPU reaches 60%, and the memory reaches 60%, etc.

It is to be noted that the scaling-out trigger condition in the embodiments of the present disclosure may be set or adjusted according to actual situations. The scaling-out trigger condition in the embodiments of the present disclosure may be set to be based on only one KPI, or based on a group of KPIs. When the scaling-out trigger condition is set to be based on a group of KPIs, scaling-out is performed when all KPI thresholds in the group are reached at the same time. Of course, in exemplary implementations, multiple scaling-out trigger conditions may also be set, and the corresponding scaling-out schemes may be performed when different scaling-out trigger conditions are met.

The scaling-out strategy in the embodiments of the present disclosure is set based on the service type and the current situation of the service. Specifically, the scaling-out strategy in the embodiments of the present disclosure is set based on the service type of the service and a certain KPI of the service (or each KPI in a certain group of KPIs).

A matching relationship between the scaling-out trigger condition and the scaling-out strategy in the embodiments of the present disclosure is illustrated below by taking a call service as an example.
1) When the designated telephone traffic reaches 12000caps/s, scaling-out one SCP will be triggered automatically.
2) When the designated telephone traffic reaches 15000caps/s, the CPU reaches 60%, and the memory reaches 60%, scaling-out two SCPs will be triggered automatically.
3) When the designated telephone traffic reaches 12000caps/s, the number of database threads reaches 15, scaling-out one SCP and one Service Data Point (SDP) will be triggered automatically.

In general, in the embodiments of the present disclosure, by setting multiple scaling-out trigger conditions and setting a matching scaling-out strategy for each scaling-out trigger condition, the VNFM can match the scaling-out trigger condition with the preset scaling-out strategy, and automatically scale out the one or more VMs by group according to the matching scaling-out strategy. In this way, the method in the embodiments of the present disclosure effectively avoids the operation of manually configuring the VM at a service side in the related art, shortens the time of scaling-out, and can realize scaling-out without interrupting the service.

In exemplary implementations, the scaling-out module of the embodiments of the present disclosure scales out multiple VMs with different device types related to the service by group according to the matching scaling-out strategy.

In general, in the embodiments of the present disclosure, after the preset scaling-out trigger condition is met, the one or more VMs are scaled out according to the service type of the service. Specifically, when a certain KPI of the service is greater than the preset first threshold of the KPI, or each KPI in a certain of KPIs is greater than the preset first threshold corresponding to the KPI, multiple VMs of different device types related to the service are scaled out by group according to the service type of the service and the requirement of the service. That is, when the scaling-out strategy includes information about multiple interrelated VMs, device types of the multiple interrelated VMs may be the same or different.

That is, the VNFM in the embodiments of the present disclosure supports scaling-out and scaling-in by group. The concept of scaling-out and scaling-in "by group" refers to arranging multiple VMs of different types associated with each other in the same group according to service requirements. A certain service may correspond to one group, or a certain function may correspond to one group, or a certain kind of configuration may correspond to one group.

In exemplary implementation of the embodiments of the present disclosure, the scaling-out trigger condition and the scaling-out strategy corresponding to the scaling-out trigger condition are set according to the service type and the actual needs of the service.

The scaling-out mode of the embodiments of the present disclosure is relatively flexible, and performs scaling-out according to the actual situation of the service, which can not only ensure the normal operation of the service, but also maximize the utilization of resources. Users do not need to pay attention to the specific devices to be scaled out, so as to obtain a better user experience.

In exemplary implementations, the apparatus of the embodiments of the present disclosure further includes: a first setting module, a configuring module and a second setting module. The first setting module is configured to set a VM property of each of the one or more VMs scaled out. The VM property includes one or more of the following: the local number, the module number, the process number, and the device type.

The configuring module is configured to, according to the service, create resources, install versions and configure service parameters on the one or more VMs scaled out, and configure modules, links and services between VMs through the injection file, wherein the injection file includes VM properties of the VMs.

The second setting module is configured to set a unique identity for the scaling-out, and assign the unique identity to each of the one or more VMs scaled out.

That is, in the embodiments of the present disclosure, the second setting module is configured to set the unique identity for all the VMs scaled out in the same group, wherein the unique identity is used to identify the VMs in the same group of VMs scaled out for the service.

Specifically, in the embodiments of the present disclosure, the VNFM scales out the one or more VMs according to the preset scaling-out strategy, and then sets a VM property of each of the one or more VMs scaled out and the unique identity of all the VMs in the group after scaling-out.

The VM property in the embodiments of the present disclosure includes one or more of the following: a local number, a module number, a process number, and a device type. Of course, in exemplary implementations, those having ordinary skill in the art may also set other VM properties, which is not limited in the embodiments of the present disclosure.

When the VM properties are arranged, the local number, the module number, the specific process number, the device type (SCP, SDP, IMP, etc.) and other information are configured. The VNFM stores the configured information in the injection file. By adding the unique identity to a group of VMs, for example, if two VMs, namely VM1 (SP) and VM2 (SDP), are scaled out at the same time (there is also a grouping label for scaling-out only one machine), both the two VMs have the unique identity. The unique identity represents that the two VMs are scaled out by group according to the service type. After a service version is installed on the VMs scaled out, the related configuration of modules, links and services between two VMs is performed through the injection file. After configuration, the VNFM notifies the OMU at the service side to bring the service online. As such, the scaling-out is completed.

In exemplary implementations, the apparatus of the embodiments of the present disclosure further includes: a detecting module and a processing module.

The detecting module is configured to monitor the one or more VMs scaled out.

The processing module is configured to, when the detecting module detects that a VM is abnormal, delete the abnormal VM and scale out a VM to replace the abnormal VM.

Specifically, when the detecting module detects that that a certain VM fails, or the link between the two VMs is broken, or a certain service module reports a service exception alarm, the processing module queries the unique identity of the failed VM and finds, according to the unique identity, the service type of the service corresponding to the VM, takes the VM offline, and scale out one or more VMs with the same VM property as the failed VM according to the service type. Or, the processing module queries the unique identity of the VM and finds, according to the unique identity, the service type of the service corresponding to the VM, scales out one or more VMs with the same device type as the failed VM according to the service type, and takes the failed VM offline.

That is, the method of the embodiments of the present disclosure further includes a fault auto-test and auto-recovery function. In exemplary implementations, when the VNFM detects that a certain VM fails, or there is a link break alarm report between the two VMs, or a certain service module reports a service exception alarm, the following auto-recovery scheme is adopted.

If the VM needing to be scaled out has the same VM property as the failed VM, for example, the VM needing to be scaled out and the failed VM have the same IP address, local number or module number, then first a unique identity on the VM is queried to find the corresponding service type, the failed VM is brought offline, and the failed VM is deleted; at the same time, scaling-out is initiated, and property information of the VM scaled out is set to be consistent with the VM property of the failed VM.

For example, there are currently two SCPs and one SDP under the call service, if it is detected that one of the two SCPs is abnormal, the OMU is notified to bring the abnormal SCP offline, and at the same time scale out one SCP, so as to keep the VM properties of the two VMs consistent.

The other mechanism is relatively safe. That is, the VM property is not required to be the same as before. When it is detected that a VM is abnormal, the unique identity on the VM is first queried to find the corresponding service type, then one or more VMs with the corresponding device type are scaled out, and then the abnormal VM is deleted.

For example, there are currently two abnormal SCPs and one SDP under the call service, if it is detected that one of the two SCPs is abnormal, first the service type is determined according to the abnormal SCP, scaling-out is initiated, and the service is brought online. After the OMU feeds back that a node goes online normally, the abnormal SCP is brought offline.

A fifth embodiment of the present disclosure provides a scaling-in apparatus in a first NFV system. With reference to Fig. 10, the apparatus includes: a second determining module, a second obtaining module and a scaling-in module.

The second determining module is configured to determine whether a set scaling-in trigger condition is met according to current usage of a service, and when the scaling-in trigger condition is met, trigger the second obtaining module.

The second obtaining module is configured to obtain a preset scaling-in strategy matching the scaling-in trigger condition, wherein the scaling-in strategy includes information about one or more interrelated VMs that need to be scaled in.

The scaling-in module is configured to scale in the one or more VMs according to the matching scaling-in strategy.

That is, after the preset scaling-in trigger condition is met, the VNFM matches the scaling-in trigger condition with the preset scaling-in strategy, and scales in one or more VMs according to the matching scaling-in strategy, thus realizing automatic scaling-in of the VM according to the service type of the service.

Similar to scaling-out, the multiple interrelated VMs in the scaling-in strategy of the embodiments of the present disclosure have the same or different device types.

In exemplary implementations, the scaling-in strategy of the embodiments of the present disclosure includes that: one or more KPIs of the service are less than one or more preset second thresholds respectively corresponding to the one or more KPIs.

In exemplary implementations, the scaling-in module of the embodiments of the present disclosure is further configured to query a unique identity on the VM according to a service type of the service, look up, according to the unique identity, all VMs in the same group of VMs scaled out for the service, and scale in the one or more VMs according to the matching scaling-in strategy.

In exemplary implementations, the scaling-in trigger condition of the embodiments of the present disclosure includes that: a certain KPI of the service is less than the preset second threshold of the KPI, or each KPI in a certain group of KPIs is less than the preset second threshold corresponding to the KPI.

For example, the scaling-in trigger condition is set as follows: the telephone traffic is lower than 15000caps/s and higher than 12000caps/s. Or, the scaling-in trigger condition is set as follows: the telephone traffic is lower than 12000caps/s, and the number of database threads is less than 10, etc.

It is to be noted that the scaling-in trigger condition in the embodiments of the present disclosure may be set or adjusted according to actual situations. The scaling-in trigger condition in the embodiments of the present disclosure may be set to be based on only one KPI, or based on a group of KPIs. When the scaling-in trigger condition is set to be based on a group of KPIs, scaling in is performed when all KPI thresholds in the group are reached at the same time. Of course, in exemplary implementations, multiple scaling-in trigger conditions may also be set, and the corresponding scaling-in schemes may be performed when different scaling-in trigger conditions are met.

The scaling-in strategy in the embodiments of the present disclosure is set based on the service type and the current situation of the service. Specifically, the scaling-in strategy in the embodiments of the present disclosure is set based on the service type of the service and a certain KPI of the service (or each KPI in a certain group of KPIs).

The matching relationship between the scaling-out trigger condition and the scaling-out strategy in the embodiments of the present disclosure is illustrated below by taking the call service as an example.

When the designated telephone traffic is lower than 15000caps/s and higher than 12000caps/s, the CPU is lower than 40%, and the memory reaches 40%, scaling-in one SCP will be triggered automatically.

When the designated telephone traffic is lower than 12000caps/s, and the number of database threads is less than 10, scaling-in one SCP and one SDP will be triggered automatically.

It is to be noted that similar to the scaling-out trigger condition, the scaling-in trigger condition in the embodiments of the present disclosure may also be set or adjusted according to actual situation. The scaling-in trigger condition in the embodiments of the present disclosure may be set to be based on only one KPI, or based on a group of KPIs. When the scaling-in trigger condition is set to be based on a group of KPIs, scaling-out is performed when all the set second thresholds in the group are reached at the same time. Of course, in exemplary implementations, multiple scaling-in trigger conditions may also be set, and the corresponding scaling-in schemes may be performed when different scaling-in trigger conditions are met.

In general, in the embodiments of the present disclosure, by setting multiple scaling-in trigger conditions and setting a matching scaling-in strategy for each scaling-in trigger condition, the VNFM can match the scaling-in trigger condition with the preset scaling-in strategy, and automatically scale in one or more VMs by group according to the matching scaling-in strategy. In this way, the method in the embodiments of the present disclosure effectively avoids the operation of manually configuring the VM at a service side in the related art, shortens the time of scaling-in, and can realize scaling-in without interrupting the service.

In exemplary implementations, the scaling-in module in the embodiments of the present disclosure queries, after the preset scaling-in trigger condition is met, the unique identity on the VM based on the service type of the service, looks for, according to the unique identity, all VMs in the same group of VMs scaled out for the service, and scales in the one or more VMs scaled out in the same group according to the scaling-in strategy matched by the matching module.

Specifically, when a certain KPI of the service is less than the preset second threshold of the KPI, or each KPI in a certain of KPIs is less than the preset second threshold corresponding to the KPI, multiple VMs with different device types related to the service are scaled in by group according to the matching scaling-in strategy.

The VNFM in the embodiments of the present disclosure supports scaling-out and scaling-in by group. The concept of scaling-out and scaling-in "by group" refers to arranging multiple VMs of different types associated with each other in the same group according to service requirements. It can be understood that a certain service may correspond to one group, or a certain function may correspond to one group, or a certain kind of configuration may correspond to one group.

In exemplary implementations of the embodiments of the present disclosure, the scaling-in trigger condition and the scaling-in scheme corresponding to the scaling-in trigger condition are set according to the service type and the actual needs of the service.

The scaling-out and scaling-in mode of the embodiments of the present disclosure is relatively flexible, and performs scaling-out and scaling-in according to the actual situation of the service, which can not only ensure the normal operation of the service, but also maximize the utilization of resources. Users do not need to pay attention to the specific devices to be scaled out or scaled in.

A sixth embodiment of the present disclosure provides a VNFM, which may be understood as a physical device. The VNFM includes the scaling-out apparatus in a NFV system in the fourth embodiment of the present disclosure and the scaling-in apparatus in a NFV system in the fifth embodiment of the present disclosure. For the specific embodiment process, the fourth embodiment and the fifth embodiment may be referred to, and the specific content will not be repeated here.

A seventh embodiment of the present disclosure provides a computer-readable storage medium, which includes a processor and a memory storing an instruction executable for the processor. When executed by the processor, the instruction performs the following operations.

It is determined whether a set scaling-out trigger condition is met according to current usage of a service.

When the scaling-out trigger condition is met, a preset scaling-out strategy matching the scaling-out trigger condition is obtained, wherein the scaling-out strategy includes information about one or more interrelated VMs that need to be scaled out.

The one or more VMs are scaled out according to the matching scaling-out strategy.

For the specific embodiment process of the operations in the method, the first embodiment may be referred to, and the specific content will not be repeated here.

An eighth embodiment of the present disclosure provides a computer-readable storage medium, which includes a processor and a memory storing an instruction executable for the processor. When executed by the processor, the instruction performs the following operations.

It is determined whether a set scaling-in trigger condition is met according to current usage of a service.

When the scaling-in trigger condition is met, a preset scaling-in strategy matching the scaling-in trigger condition is obtained, wherein the scaling-in strategy includes information about one or more interrelated VMs that need to be scaled in.

The one or more VMs are scaled in according to the matching scaling-in strategy.

For the specific embodiment process of the operations in the method, the second embodiment may be referred to, and the specific content will not be repeated here.

In addition, it is to be noted that the storage medium in the embodiments of the present disclosure is the same as the computer-readable storage medium.

The beneficial effect of the present disclosure is as follows.

The method, the apparatus and the storage medium in the embodiments of the present disclosure may scale out and scale in one or more VMs based on the service. In the embodiments of the present disclosure, when the scaling-out or scaling-in trigger condition is met, the scaling-out or scaling-in strategy matching the scaling-out or scaling-in trigger condition is obtained, and then the one or more VMs are scaled out or scaled in according to the matching scaling-out or scaling-in strategy. This technical solution effectively solves the problem in the related art that the NFV system can only scale out and scale in for the device type, which limits the development of the NFV system.

It is to be noted that terms "include" and "contain" or any other variant thereof is intended to cover nonexclusive inclusions herein, so that a process, method, object or device including a series of elements not only includes those elements but also includes other elements which are not explicitly listed, or further includes elements intrinsic to the process, the method, the object or the device. Under the condition of no more limitations, an element defined by the statement "including a/an......" does not exclude existence of the same other elements in a process, method, object or device including the element.

The sequence numbers of the embodiments of the present disclosure are just for describing, instead of representing superiority-inferiority of the embodiments.

Through the above description of the implementations, those having ordinary skill in the art can understand that the method according to the above embodiments may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

The embodiments of the present disclosure are described above with reference to the drawings, but the present disclosure is not limited to exemplary implementations described above. The exemplary implementations are only indicative and not restrictive. Under the inspiration of the present disclosure, those having ordinary skill in the art can derive many forms of implementations without departing from the purpose and the protection scope of the claims of the present disclosure, and all the forms of implementations fall within the protection of the present disclosure.

## Claims

1. A scaling-out method in a Network Function Virtualization, NFV, system, comprising:
determining whether a set scaling-out trigger condition is met according to current usage of a service;
when the scaling-out trigger condition is met, obtaining a preset scaling-out strategy matching the scaling-out trigger condition, wherein the scaling-out strategy comprises information about one or more interrelated Virtual Machines, VMs, that need to be scaled out; and
scaling-out the one or more VMs according to the matching scaling-out strategy.

2. The method as claimed in claim 1, wherein
when the scaling-out strategy comprises information about multiple interrelated VMs, device types of the multiple interrelated VMs are the same or different.

3. The method as claimed in claim 1, wherein
the scaling-out trigger condition comprises: one or more Key Performance Indicators, KPIs, of the service are greater than one or more preset first thresholds respectively corresponding to the one or more KPIs.

4. The method as claimed in claim 1, wherein after scaling-out the one or more VMs, the method further comprises:
setting a VM property of each of the one or more VMs scaled out;
the VM property comprises one or more of the following: a local number, a module number, a process number, and a device type.

5. The method as claimed in claim 1, wherein after scaling-out the one or more VMs, the method further comprises:
according to the service, creating resources, installing versions and configuring service parameters on the one or more VMs scaled out, and configuring modules, links and services between VMs through an injection file, wherein the injection file comprises VM properties of the VMs.

6. The method as claimed in any one of claim 1 to 5, wherein scaling-out the one or more VMs further comprises:
setting a unique identity for the scaling-out, and assigning the unique identity to each of the one or more VMs scaled out.

7. The method as claimed in any one of claims 1 to 5, further comprising:
monitoring the one or more VMs scaled out;
when it is detected that a VM is abnormal, deleting the abnormal VM and scaling-out a VM to replace the abnormal VM.

8. The method as claimed in claim 7, wherein
a device type of the VM that is scaled out to replace the abnormal VM is the same as a device type of the abnormal VM;
or,
a VM property of the VM that is scaled out to replace the abnormal VM is the same as a VM property of the abnormal VM.

9. A scaling-in method in a Network Function Virtualization, NFV, system, comprising:
determining whether a set scaling-in trigger condition is met according to current usage of a service;
when the scaling-in trigger condition is met, obtaining a preset scaling-in strategy matching the scaling-in trigger condition, wherein the scaling-in strategy comprises information about one or more interrelated Virtual Machines, VMs, that need to be scaled in; and
scaling-in the one or more VMs according to the matching scaling-in strategy.

10. The method as claimed in claim 9, wherein
when the scaling-in strategy comprises information about multiple interrelated VMs, device types of the multiple interrelated VMs are the same or different.

11. The method as claimed in claim 9, wherein
the scaling-in strategy comprises: one or more Key Performance Indicators, KPIs, of the service are less than one or more preset second thresholds respectively corresponding to the one or more KPIs.

12. The method as claimed in any one of claim 9 to 11, wherein scaling-in the one or more VMs according to the matching scaling-in strategy comprises:
querying a unique identity on the VM according to a service type of the service, looking up, according to the unique identity, all VMs in the same group of VMs scaled out for the service, and scaling-in one or more VMs according to the matching scaling-in strategy.

13. A scaling-out apparatus in a Network Function Virtualization, NFV, system, comprising:
a first determining module, configured to determine whether a set scaling-out trigger condition is met according to current usage of a service, and when the scaling-out trigger condition is met, trigger a first obtaining module;
the first obtaining module, configured to obtain a preset scaling-out strategy matching the scaling-out trigger condition, wherein the scaling-out strategy comprises information about one or more interrelated Virtual Machines, VMs, that need to be scaled out; and
a scaling-out module, configured to scale out the one or more VMs according to the matching scaling-out strategy.

14. The apparatus as claimed in claim 13, wherein
when the scaling-out strategy comprises information about multiple interrelated VMs, device types of the multiple interrelated VMs are the same or different.

15. The apparatus as claimed in claim 13, wherein
the scaling-out trigger condition comprises: one or more Key Performance Indicators, KPIs, of the service are greater than one or more preset first thresholds respectively corresponding to the one or more KPIs.

16. The apparatus as claimed in claim 13, further comprising:
a first setting module, configured to set a VM property of each of the one or more VMs scaled out, wherein the VM property comprises one or more of the following: a local number, a module number, a process number, and a device type.

17. The apparatus as claimed in claim 13, further comprising:
a configuring module, configured to, according to the service, create resources, install versions and configure service parameters on the one or more VMs scaled out, and configure modules, links and services between VMs through an injection file, wherein the injection file comprises VM properties of the VMs.

18. The apparatus as claimed in any one of claims 13 to 17, further comprising:
a second setting module, configured to set a unique identity for the scaling-out, and assign the unique identity to each of the one or more VMs scaled out.

19. The apparatus as claimed in any one of claims 13 to 17, further comprising:
a detecting module and a processing module;
the detecting module is configured to monitor the one or more VMs scaled out;
the processing module is configured to, when it is detected that a VM is abnormal, delete the abnormal VM and scale out a VM to replace the abnormal VM.

20. A scaling-in apparatus in a first Network Function Virtualization, NFV, system, comprising:
a second determining module, configured to determine whether a set scaling-in trigger condition is met according to current usage of a service, and when the scaling-in trigger condition is met, trigger a second obtaining module;
the second obtaining module, configured to obtain a preset scaling-in strategy matching the scaling-in trigger condition, wherein the scaling-in strategy comprises information about one or more interrelated Virtual Machines, VMs, that need to be scaled in; and
a scaling-in module, configured to scale in the one or more VMs according to the matching scaling-in strategy.

21. The apparatus as claimed in claim 20, wherein
when the scaling-in strategy comprises information about multiple interrelated VMs, device types of the multiple interrelated VMs are the same or different.

22. The apparatus as claimed in claim 20, wherein
the scaling-in strategy comprises: one or more Key Performance Indicators, KPIs, of the service are less than one or more preset second thresholds respectively corresponding to the one or more KPIs.

23. The apparatus as claimed in any one of claims 20 to 22, wherein
the scaling-in module is further configured to query a unique identity on the VM according to a service type of the service, look up, according to the unique identity, all VMs in the same group of VMs scaled out for the service, and scale in the one or more VMs according to the matching scaling-in strategy.

24. A Virtual Network Function Manager, VNFM, comprising: the scaling-out apparatus in a Network Function Virtualization, NFV, system as claimed in any one of claims 13 to 19 and the scaling-in apparatus in the NFV system as claimed in any one of claims 20 to 23.

25. A computer readable storage medium, storing a computer program of signal mapping, the computer program is executed by at least one processor to implement the scaling-out method in a Network Function Virtualization, NFV, system as claimed in any one of claims 1 to 8.

26. A computer readable storage medium, storing a computer program of signal mapping, the computer program is executed by at least one processor to implement the scaling-in method in a Network Function Virtualization, NFV, system as claimed in any one of claims 9 to 12.
